# EUROPEAN PATENT APPLICATION

(11) **EP 3 977 896 A1**
(43) Date of publication of application: **06.04.2022**
(21) Application number: 20813038.5
(22) Date of filing: 01.06.2020
(51) Int. Cl.: A47C 1/025, B60N 2/235

(54) **SEAT RECLINING STRUCTURE AND VEHICLE SEAT**

(30) Priority: 31.05.2019 JP 2019103399
(71) Applicant: Delta Kogyo Co., Ltd., Aki-gun, Hiroshima 735-8501 (JP)
(72) Inventor: FUJITA, Etsunori, Aki-gun, Hiroshima 735-8501 (JP); TAKENAKA, Kazuhiro, Aki-gun, Hiroshima 735-8501 (JP); FUKUDA, Jun, Aki-gun, Hiroshima 735-8501 (JP); YAMASHITA, Mitsuhiro, Aki-gun, Hiroshima 735-8501 (JP); OTANI, Yoshinobu, Aki-gun, Hiroshima 735-8501 (JP); OGURA, Yumi, Aki-gun, Hiroshima 735-8501 (JP)
(74) Representative: Hoffmann Eitle
(86) International application number: PCT/JP2020/021539
(87) International publication number: WO 2020/241898

(57) **Abstract**

To reduce an operation synchronization failure of recliners on both sides of a seat frame, thereby enabling smoother operation despite variations in the dimensional accuracy of the seat frame. A seat recliner structure includes: recliners which are provided on the left and right sides of a cushion frame and a back frame to recline the back frame relative to the cushion frame; and a connecting rod which connects the left and right recliners to synchronize them, wherein the left and right recliners have different backlashes, and the backlash of the driving-side recliner is smaller than the backlash of the driven-side recliner.

## Description

### Technical Field

The present invention relates to a seat recliner structure and a vehicle seat including the seat recliner.

### Background Art

To make a high-strength and high-rigidity seat with a weight reduction taken into consideration, an automobile seat having compact and thin recliners on its both sides is used. Recliners need to surely lock, have a small backlash, and be hardly broken at the time of collision.

As such a recliner, in Patent Document 1, the present applicant has proposed one achieving both a reduction in backlash and smooth movement by having grooves formed in its lock gear and guide bracket and having steel balls disposed in the grooves. In Patent Application No. 2019-70768, the present inventor has also proposed a recliner achieving a further reduction in backlash by having steel balls formed in a shape more easily fitting in grooves.

### Prior Art Document

### Patent Document

Patent Document 1: WO2017/043665

### Disclosure of the Invention

### Problems to Be Solved by the Invention

However, seat back frames have dimensional variations, and deterioration in the locking performance of a recliner may cause the generation of abnormal sound and the like. As for a lock failure due to variations of parts, providing play reduces the possibility of the occurrence of the lock failure. Providing the play, however, causes the generation of abnormal sound. It is often the case that this abnormal sound is not generated in a normal state but is generated during traveling on rough roads. Therefore, it is expected that in ordinary management, the abnormal sound can be controlled based on an index indicating the generation of abnormal sound. Further, if this index can be reflected in structure design by taking this index into consideration at a design stage, it may be possible to eliminate a cause of the failure in advance.

A seat frame of an automobile is one structure in which various press parts are welded. A back frame and a cushion frame are joined through recliners to constitute a seat frame. The press parts are made with high accuracy but welded structures have machining variations, and when they are assembled, various defects occur. Recliners made of thick plate parts and a frame made of a thin plate greatly differ in section modulus. The left and right recliners are made to synchronously function by a connecting rod. The connecting rod is elastically deformed by the accumulation of assembly variations to have a residual stress. This increases the sliding resistance of internal parts of the recliners to cause a synchronization failure that is a failure in synchronous locking of the left and right recliners or pseudo-locking that is a lock failure of one of the recliners.

The present invention was made in consideration of the above and has an object to provide a seat recliner structure that achieves a reduction in operation synchronization failure and the like of recliners on both sides of a seat frame to be capable of smoother operation despite variations in the dimensional accuracy of the seat frame, and to provide a vehicle seat including the seat recliner structure.

### Means for Solving the Problems

To solve the above problem, the present invention is a seat recliner structure including: recliners provided on a left side and a right side of a cushion frame and a back frame to recline the back frame relative to the cushion frame; and a connecting rod which connects the left and right recliners to synchronize the left and right recliners,
wherein the left and right recliners have different backlashes, and the backlash of the driving-side recliner is smaller than the backlash of the driven-side recliner.

Further, the present invention provides the seat recliner structure, wherein the left and right recliners each have: a guide bracket and an internal gear which rotate relative to each other, one of which is attached to the cushion frame, and the other of which is attached to the back frame; and a plurality of lock gears which operate in a diameter direction between the guide bracket and the internal gear to separate from and approach each other and which include external teeth engageable with internal teeth of the internal gear, and
wherein the left and right recliners are different in the backlash depending on the presence or absence of a steel ball between any of the plurality of lock gears and the guide bracket.

Preferably, the recliner having the steel ball is relatively smaller in the backlash than the recliner not having the steel ball.

Further, the present invention provides the seat recliner structure, wherein the left and right recliners each have: a guide bracket and an internal gear which rotate relative to each other, one of which is attached to the cushion frame, and the other of which is attached to the back frame; and a plurality of lock gears which operate in a diameter direction between the guide bracket and the internal gear to separate from and approach each other and which include external teeth engageable with internal teeth of the internal gear,
wherein the left and right recliners each have a steel ball provided between any of the plurality of lock gears and the guide bracket, and
wherein the left and right recliners are different in the backlash depending on a difference in the shape of grooves provided in facing surfaces of the lock gear where the steel ball is disposed and the guide bracket.

Preferably, the backlash is relatively smaller as a circumferential-direction movement amount of the steel ball restricted by the grooves is smaller.

Preferably, a difference in clearance size between a lock gear between which and the guide bracket the steel ball is not provided, out of the plurality of lock gears, and at least one of surfaces, of the guide bracket and the internal gear, facing the lock gear further makes the backlashes different.

Further, the present invention provides the seat recliner structure,
wherein the left and right recliners are selected from those that are substantially equal in spring constants in linear change ranges of load-deflection characteristics both in a front-rear direction and a left-right direction, the load-deflection characteristics being indicated by the spring constants that are found from a relation between a load and a deflection amount which is measured at an input point of the load when a plate member is attached to a fixing jig through the recliner, and the load up to 50 N is applied in the front-rear direction and the left-right direction of the plate member to a position, of the plate member, 500 mm above a rotation center of the recliner, and
wherein the driving-side and driven-side recliners are selected based on determination that, when entire deflection amount change ranges of the load-deflection characteristics are compared, a recliner whose characteristics in the front-rear direction and the left-right direction both exhibit relatively the highest linearity has the smallest backlash, and as compared with the recliner having the smallest backlash, a recliner whose characteristic only in one of the front-rear direction and the left-right direction exhibits weak linearity has a relatively larger backlash and a recliner whose characteristics in the front-rear direction and the left-right direction both exhibit weak linearity has a still larger backlash.

The present invention further provides a vehicle seat including a seat recliner structure for reclining a back frame relative to a cushion frame,
wherein the seat recliner structure is the above-described seat recliner structure.

### Effect of the Invention

According to the present invention, since the backlash of the driving-side recliner is smaller than the backlash of the driven-side recliner, it is possible to enhance the synchronization of the movements of the left and right recliners, thereby enabling smoother operation despite variations in the dimensional accuracy of the seat frame including the cushion frame and the back frame.

### Brief Description of Drawings

[FIG. 1] FIG. 1 is a perspective view illustrating a seat frame of a vehicle seat according to one embodiment of the present invention.

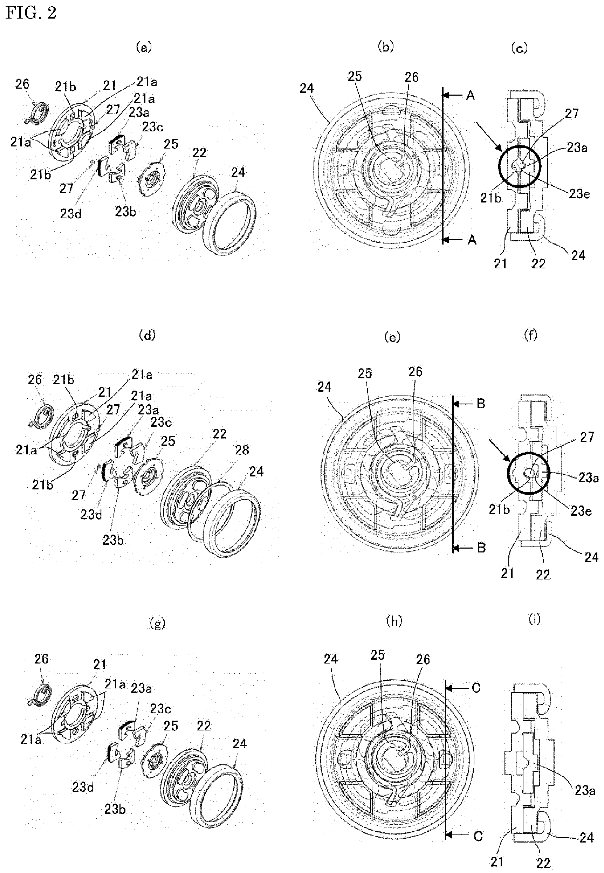

[FIGs. 2] FIGs. 2(a) to (c) illustrate a schematic structure of "a recliner High" of Examples, (a) being its exploded perspective view, (b) being its plan view, and (c) being its sectional view taken along the A-A line in (b). FIGs. 2(d) to (f) illustrate a schematic structure of "a recliner: Middle" of Examples, (d) being its exploded perspective view, (e) being its plan view, and (f) being its sectional view taken along the B-B line in (e). FIGs. 2(g) to (i) illustrate a schematic structure of "a recliner: Low" of Examples, (g) being its exploded perspective view, (h) being its plan view, and (i) being its sectional view taken along the C-C line in (h).
[FIGs. 3] FIG. 3(a) is an explanatory view of a measurement method of load-deflection characteristics which are each measured when the recliner of Examples is attached to a fixing jig and a plate member is attached to the recliner, and FIGs. 3(b), (c) are explanatory views of a measurement method of load-deflection characteristics which are measured when the recliners of Examples are attached to both sides of a rigid frame corresponding to a back frame.
[FIGs. 4] FIGs. 4(a) to (c) are charts illustrating the measurement results of the load-deflection characteristics of "the recliner: High", "the recliner: Middle", and "the recliner: Low" respectively.
[FIG. 5] FIG. 5 is a chart illustrating the measurement results of the load-deflection characteristics in the front-rear direction when "the recliner: High" is attached both as a driving side and a driven side.
[FIG. 6] FIG. 6 is a chart illustrating the measurement results of the load-deflection characteristics in the front-rear direction when "the recliner: High" is attached as the driving side and "the recliner: Middle" is attached as the driven side.
[FIG. 7] FIG. 7 is a chart illustrating the measurement results of the load-deflection characteristics in the front-rear direction when "the recliner: High" is attached as the driving side and "the recliner: Low" is attached as the driven side.

### Description of Embodiments

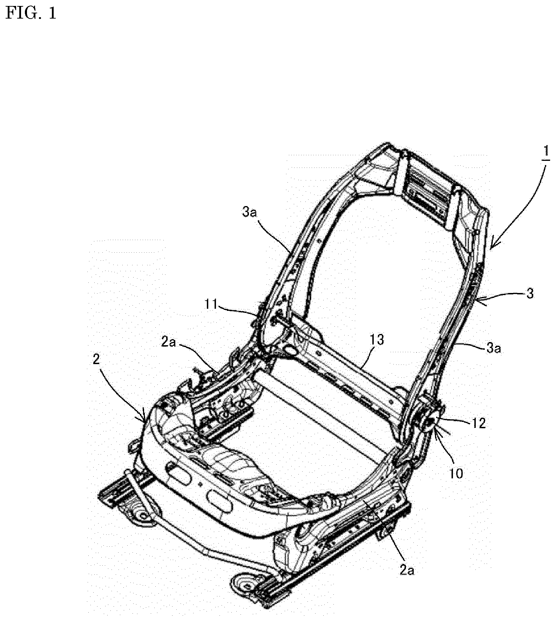

The present invention will be hereinafter described in more detail based on embodiments illustrated in the drawings. FIG. 1 illustrates a vehicle seat 1 for automobiles in which a seat recliner structure 10 according to one embodiment of the present invention is adopted. The seat recliner structure 10 is attached between side frames 2a of a seat cushion frame 2 and side frames 3a of a seat back frame 3.

The seat recliner structure 10 includes recliners 11, 12 arranged on the left and right and a connecting rod 13 connecting shaft portions of the left and right recliners 11, 12. Out of the left and right recliners 11, 12, one is a driving side to which driving members such as an operation lever, a motor, and so on are connected, and the other is a driven side. In this embodiment, the recliner 11 is the driving side and the recliner 12 is the driven side. The driving-side recliner 11 and the driven-side recliner 12 are different in backlash. The backlash of the driving-side recliner 11 is smaller than the backlash of the driven-side recliner.

### (Examples)

To make the driving-side recliner 11 and the driven-side recliner 12 satisfy such a condition, three recliners having relatively small to large backlashes (the recliner with a small backlash will be referred to as "High", the recliner with a middle-level backlash as "Middle", and the recliner with the largest backlash as "Low") were checked. The recliners illustrated in FIGs. 2 each have a basic structure that four lock gears 23a to 23d are enclosed in a space formed by a guide bracket 21 and an internal gear 22. Reference sign 24 denotes a ring having a ring-shaped bottom wall 24a and a circumferential wall 24b rising from the periphery of the bottom wall 24a. On an inner side of the circumferential wall 24b of the ring 24, the internal gear 22 is disposed, and the circumferential surface of the guide bracket 21 is fixed to a position close to an upper end of the circumferential wall 24b by welding. That is, the ring 24 and the guide bracket 21 are formed as an integrated structure by welding, and the internal gear 22 is rotatable relative to the ring 24 and the guide bracket 21. The ring 24 and the guide bracket 21 are fixed to the seat cushion frame 2, and the internal gear 22 is fixed to the seat back frame 3. The lock gears 23a to 23d move in the diameter direction to separate from and approach one another when a cam 25 disposed on their inner periphery side rotates. In a normal state, the cam 25 is biased in one direction by a spring 26 to press the lock gears 23a to 23d outward to make external teeth of the lock gears 23a to 23d engage with internal teeth of the internal gear 22. This is a locked state, and to release the locking, a not-illustrated operation lever is operated to rotate the cam 25 in the other direction. Consequently, the lock gears 23a to 23d move in the center direction while resisting the spring 25, resulting in the disengagement between the external teeth of the lock gears 23a to 23d and the internal teeth of the internal gear 22.

The recliner: High, which has the structure proposed in Patent Application No. 2019-70768 by the present applicant, has steel balls 27 disposed between the guide bracket 21 and the two lock gears 23a, 23b (lock gear A) facing each other at an interval of 180 degrees as illustrated in FIGs. 2(a) to (c). The steel balls 27 have a function of centering the lock gears 23a, 23b in the circumferential direction in a space between a pair of guide walls 21a, 21a adjacently provided in the guide bracket 21 and also have a function of reducing a coefficient of friction by being disposed in grooves 21b, 23e provided in the guide bracket 21 and the lock gears 23a, 23b as indicated by the arrow in FIG. 2(c). The centering of the lock gears 23a, 23b reduces the backlash occurring in the recliner as compared with a case where they are disposed off-center. In the other two lock gears 23c, 23d (lock gear B), friction is generated by a compressive force at the time of actual parts matching when they are assembled. Incidentally, the compressive force at the time of the assembly is about 10 N.

Friction between the guide bracket 21 and the lock gears 23a, 23b (lock gear A) is rolling friction due to the steel balls 27, and friction between the lock gears 23a, 23b (lock gear A) and the internal gear 22 is entirely sliding friction. Incidentally, friction between the lock gears 23c, 23d (lock gear B) and the guide bracket 21 or the internal gear 22 is entirely sliding friction.

The recliner: Middle has the structure disclosed in Patent Document 1 (WO2017/043665). As illustrated in FIGs. 2(d) to (f), the shape of the grooves 21b, 23e provided in the guide bracket 21 and the lock gears 23a, 23b (lock gear A) is different from that in the recliner: High illustrated in FIGs. 2(a) to (c). In the recliner: High, left and right slopes of each of the grooves 21b, 23e form a substantially V shape and have an equal angle of inclination (about 30 to 60 degrees) with respect to the groove bottom (see FIG. 2(c)), but in the recliner: Middle, the grooves 21b of the guide bracket 21 each have a sectional shape asymmetric in the left-right direction with one of the slopes more gently inclined than the other one with respect to the groove bottom. Further, the angle of inclination of at least the slope having the gentler angle is gentler than the angle of inclination of the slopes of the recliner: High. As illustrated in FIG. 2(f), the grooves 23e formed in the lock gears 23a, 23b (lock gear A) each have a sectional shape having vertical surfaces extending at a right angle from ends of a groove bottom surface having a predetermined width. By thus forming the grooves 21b, 23e in the recliner: High and the recliner: Middle in different shapes, it is possible to design these recliners with different coefficients of friction. The circumferential-direction movement of the steel balls 27 in the grooves 21b, 23e is more restricted in the recliner: High than in the recliner: Middle, so that the coefficient of friction in the recliner: High is designed to be higher. Further, in the recliner: Middle, a clearance between the lock gears 23c, 23d (lock gear B) and the internal gear 22 is slightly larger (by 0.4 mm in this example) than in the recliner: High. Further, in the recliner: Middle, a spacer 28 is provided between the ring 24 and the internal gear 22 to reduce a frictional force. That is, in the recliner: Middle, since the angle of inclination of the grooves 21b where the steel balls 27 are disposed is gentle, their width is larger than that of the grooves 21b of the recliner: High, and the recliner: Middle adopts such a shape that the circumferential-direction movement amount of the steel balls 27 is larger than in the recliner: High. Consequently, the recliner: Middle has a relatively larger backlash as compared with the recliner: High even if its other design conditions are the same as those of the recliner: High. Further, the recliner: Middle has a larger clearance between the lock gears 23c, 23d (lock gear B) and the internal gear 22 than the recliner: High as described above, and thus is designed to surely have a relatively larger backlash than the recliner: High. If the steel balls 27 having the same size are adopted, the circumferential-direction movement amount of the steel balls 27 can be set large or small depending on the cross-sectional shape of the grooves 21b, 23e along the circumferential direction (the angle of inclination of the slopes, the width of the groove bottom, the width of the whole grooves, the depth of the grooves, and so on).

In the recliner: Low, no steel ball is disposed between the guide bracket 21 and the four lock gears 23a to 23d as illustrated in FIGs. 2(g) to (i) and the lock gears 23a to 23d slide in the space between the internal gear 22 and the guide bracket 21. The internal gear 22 is assembled to the ring 24 without any backlash owing to the guide bracket 21. A compressive force at the time of the assembly is about 10 N. The recliner: Low is designed for the driven side, and the recliner: High attached on the driving side governs the function as a structure. When the cam 25 of the driving side is rotated by the operation lever, the cam 25 of the recliner: Low is rotated through the connecting rod 13 to slide the lock gears 23a to 23d. A variation in the connecting rod 13 affects the movement of the cam 25. The cam 25 is inclined because of the variation and slides the lock gears 23a to 23d while inclined. To absorb the inclination of the lock gears 23a to 23d, there are clearances between the lock gears 23a to 23d and facing surfaces of the internal gear 22 and the guide bracket 21. The clearances help reduce the sliding resistance of the lock gears 23a to 23d to reduce a lock failure. Therefore, having no steel ball and also having such clearances, the recliner: Low is designed to have a larger backlash as compared with the recliner: Middle not mention of the recliner: High.

As described above, the recliner: High and the recliner: Middle are common in that the steel balls 27 are disposed between the guide bracket 21 and the two lock gears 23a, 23b (lock gear A) out of the four lock gears, but they are different in the shape of the grooves 21b, 23e to control the circumferential-direction movement amount of the steel balls 27, and further, preferably are different in the size of the clearance between the other two lock gears 23c, 23d (lock gear B) and the internal gear 22, whereby the recliner: High and the recliner: Middle are designed such that the former has a smaller backlash than the backlash of the latter. Further, in the recliner: High and the recliner: Middle, since the steel balls 27 are disposed, the two lock gears 23a, 23b (lock gear A) have substantially no backlash (a very small backlash) with the facing surfaces of the internal gear 22 and the guide bracket 21. On the other hand, the recliner: Low has no steel ball, preferably has the clearances between the four lock gears 23a to 23d and the facing surfaces of the internal gear 22 and the guide bracket 21, thereby being designed to have a larger backlash than those of both the recliner: High and the recliner: Middle.

### Measurement of Load-Deflection Characteristics of Recliner

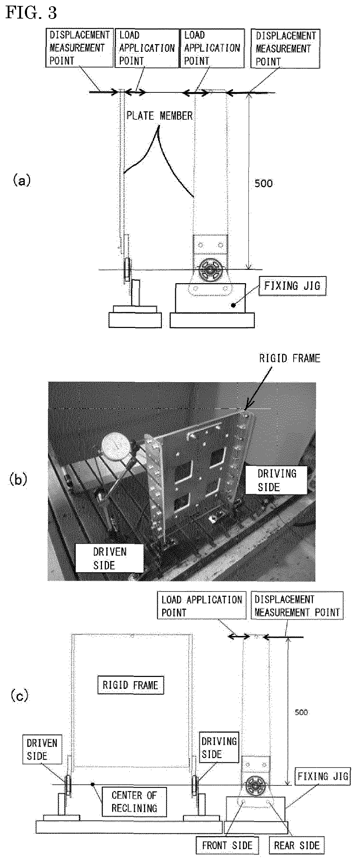

FIG. 3(a) illustrates a method of measuring the load-deflection characteristics of a recliner. The recliner is fixed to a fixing jig, a long aluminum plate member is attached to the recliner, a load up to 50 N is applied in the front-rear direction and the left-right direction of the plate member to a position, of the plate member, 500 mm above the rotation center of the recliner, and a deflection amount at the input point of the load is measured. For the measurement of the deflection amount, a dial gauge is used.

### Measurement of Load-Deflection Characteristics Using Rigid Frame

The load-deflection characteristics are measured as illustrated in FIG. 3(b) in three patterns of combination (High-High, High-Middle, High-Low), that is, "the recliner: High" is attached as the driving-side recliner 11 in FIG. 1, and as the driven-side recliner 12, any of "the recliners: High, Middle, Low" is combined. As one corresponding to a seat back frame, an aluminum rigid frame is used. The recliners assembled to the rigid frame are assembled to a fixing jig. The measurement is conducted under three conditions where a variation in the left-right direction from a basic dimension is +3 mm, nominal, and -3 mm. The + 3 mm condition is set assuming that a preliminary load is applied to a tensile direction (forward). The nominal condition is set assuming a state with no load applied to the recliners. The -3 mm condition is set assuming a state in which a preliminary load is applied in a compression direction (rearward). At four fixation portions where the left and right recliners are to be fixed to the fixing jig, spacers are inserted such that the variation becomes +3 mm, nominal, and -3 mm, and the left and right recliners are fixed to the fixing jig. As a variation condition of the seat back frame which is a welded structure, five different patterns are set. They are an offset type, a downward fanning type, an upward fanning type, a parallelogram I type (inclining rightward), and a parallelogram II type (inclining leftward). Table 1 shows the dimension settings of the four fixation portions for the above variations.

**[Table 1]**

| | 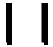 | | | | 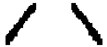 | | | | 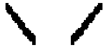 | | | | 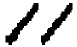 | | | | 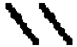 | | | |
|---|---|---|---|---|---|---|---|---|---|---|---|---|---|---|---|---|---|---|---|---|
| LEFT-RIGHT VARIATION | OFFSET TYPE | | | | DOWNWARD FANNING TYPE | | | | UPWARD FANNING TYPE | | | | PARALLELOGRAM I TYPE | | | | (PARALLELOGRAM II TYPE) | | | |
| | DRIVING SIDE | | DRIVEN SIDE | | DRIVING SIDE | | DRIVEN SIDE | | DRIVING SIDE | | DRIVEN SIDE | | DRIVING SIDE | | DRIVEN SIDE | | DRIVING SIDE | | DRIVEN SIDE | |
| +3 | FRONT | +3 | FRONT | +3 | FRONT | 0 | FRONT | 0 | FRONT | +3 | FRONT | +3 | FRONT | 0 | FRONT | +3 | FRONT | +3 | FRONT | 0 |
| | REAR | +3 | REAR | +3 | REAR | +3 | REAR | +3 | REAR | 0 | REAR | 0 | REAR | +3 | REAR | 0 | REAR | 0 | REAR | +3 |
| ±0 | FRONT | 0 | FRONT | 0 | FRONT | 0 | FRONT | 0 | FRONT | 0 | FRONT | 0 | FRONT | 0 | FRONT | 0 | FRONT | 0 | FRONT | 0 |
| | REAR | 0 | REAR | 0 | REAR | 0 | REAR | 0 | REAR | 0 | REAR | 0 | REAR | 0 | REAR | 0 | REAR | 0 | REAR | 0 |
| -3 | FRONT | -3 | FRONT | -3 | FRONT | -3 | FRONT | -3 | FRONT | 0 | FRONT | 0 | FRONT | -3 | FRONT | 0 | FRONT | 0 | FRONT | -3 |
| | REAR | -3 | REAR | -3 | REAR | 0 | REAR | 0 | REAR | -3 | REAR | -3 | REAR | 0 | REAR | -3 | REAR | -3 | REAR | 0 |

Lockability confirmation is done by subjective determination based on the confirmation of whether or not the left and right recliners lock synchronously. A lever is attached to the connecting rod and is operated in the unlocking direction to unlock the recliners on both sides. In this state, the hand is taken off the lever, and it is confirmed whether the left and right recliners synchronously lock at the time of re-locking.

To know a reference of an input, a load is input by a push pull gauge and an accurate load is read with a load cell. The displacement is measured with a dial gauge.

### Measurement of Load-deflection Characteristics of Recliners

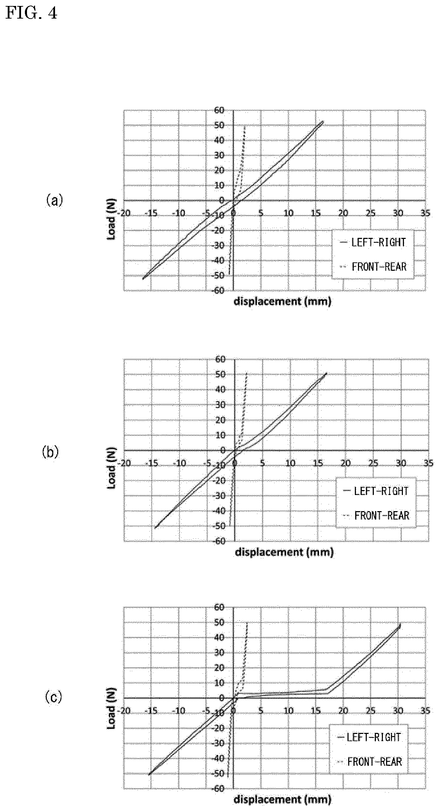

FIGs. 4 illustrate the load-deflection characteristics of the three kinds of recliners. The broken lines each indicate the load-deflection characteristic in the front-rear direction, and the solid lines each indicate the load-deflection characteristic in the left-right direction. The spring characteristics of the recliner: High in the front-rear direction and the left-right direction are linear. A spring constant (an average value of spring constants which are found in a predetermined reference deflection amount range for finding the spring constant) was 25 to 50 N/mm in the front-rear direction and was 2 to 6 N/mm in the left-right direction. The recliner: Middle exhibits a combined nonlinear spring characteristic in the front-rear direction and exhibits a substantially linear spring characteristic in the left-right direction. The spring constant in the front-rear direction was 5 to 8 N/mm in a range of a 0 to +1.5 mm deflection amount range (nonlinear range) where the spring constant became small, and in ranges before and after the 0 to +1.5 mm deflection amount range, the spring constant was similar to that in the recliner: High. Note that, in this specification, the characteristic in the case where the spring constant thus differs depending on the deflection amount range is referred to as "the combined nonlinear spring characteristic", and the middle range where the spring constant becomes small is referred to as the nonlinear range. On the other hand, the spring constant in the left-right direction was similar to that in the recliner: High. The characteristics of the recliner: Low both in the front-rear direction and in the left-right direction are combined nonlinear spring characteristics. Its spring constant in the front-rear direction was 3 to 5 N/mm in a -1 to +2 mm deflection amount range where the spring constant became small (nonlinear range), and in ranges before and after the -1 to +2 mm deflection amount range, the spring constant was similar to those in the recliner: High and the recliner: Middle. In the left-right direction, the spring constant was 0.1 to 0.5 N/mm in a 0 to +17 mm deflection amount range where the spring constant became small (nonlinear range), and in ranges before and after the 0 to +17 mm deflection amount range, the spring constant was similar to those in the recliner: High and the recliner: Middle.

As described above, as for the characteristic indicated by the spring constant found from a relation of a load and the deflection amount measured at the input point of the load when the load up to 50 N was applied in the front-rear and left-right directions to the position 500 mm above the rotation center of the recliner, both the front-rear direction and left-right direction characteristics of the recliner: High having the smallest backlash had a relatively smaller change in the spring constant in the middle than the characteristics of the other two recliners: Middle and recliner: Low and had the highest linearity in the entire deflection amount change ranges. Note that whether the linearity is high or low is thus determined based on the degree of the change in the middle of the gradient of the graph indicating the spring constant (the size of the nonlinear range) in the graph represented by the load-deflection characteristic, and as the degree of the change is smaller, the linearity is determined as being higher. In the recliner: Middle with the second smallest backlash, the spring constant in the left-right direction is similar to that in the recliner: High, but its front-rear spring characteristic is a combined nonlinear spring characteristic having a nonlinear range where the spring constant becomes small in the middle range of the deflection amount change. However, it has such a characteristic that the spring constant in the range where the linear spring characteristic is exhibited, other than the middle range, is similar to that in the recliner: High. The recliner: Low having the largest backlash exhibits a combined nonlinear spring characteristic both in the front-rear direction and in the left-right direction, and a deflection amount range where the spring constant in the left-right direction is 1 N/mm or less occupies about 1/3 of the entire left-right deflection amount.

In this specification, the driving-side recliner 11 and the driven side recliner 12 are selected based on the comparison among recliners that, in the load-deflection characteristics both in the front-rear direction and the left-right direction, are substantially equal in spring constants (within ±20% in terms of a spring constant value) in the entire deflection amount change ranges in the case where the linear spring characteristics are exhibited in the entire deflection amount change ranges, or are substantially equal in spring constants in the ranges where the linear spring characteristics are exhibited, except the middle deflection amount ranges (nonlinear ranges) where the spring constants become small in the case where the combined nonlinear spring characteristics are exhibited. At this time, one whose characteristics both in the front-rear direction and the left-right direction exhibit relatively the highest linearity in the entire deflection amount change ranges (exhibit a relatively small change in the spring constant in the middle ranges) is defined as having the smallest backlash. Then, as compared with the characteristics of the recliner having the smallest backlash, one exhibiting the combined nonlinear spring characteristic only in one of the front-rear direction and the left-right direction (the front-rear direction in this example) is defined as having a relatively larger backlash and one exhibiting the combined nonlinear spring characteristic both in the front-rear direction and the left-right direction is defined as having a relatively still larger backlash. Then, the driving-side recliner 11 and the driven-side recliner 12 are selected from the compared recliners using such criteria.

### Measurement of Load-deflection Characteristics Using Rigid Frame

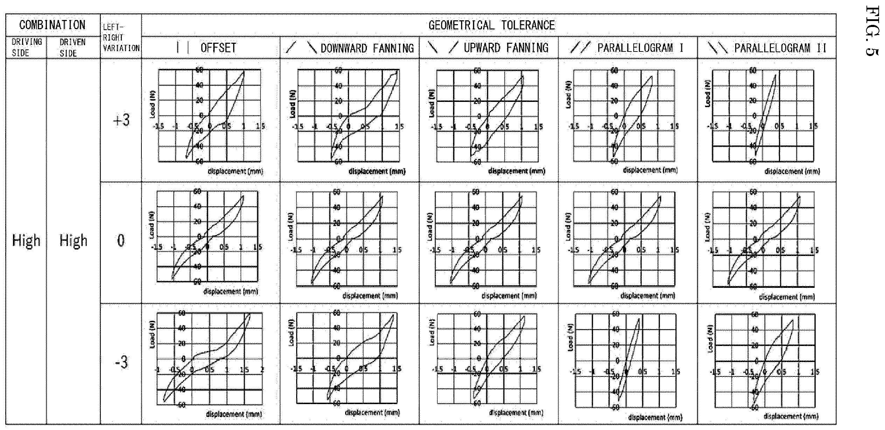

FIGs. 5 to 7 illustrate the load-deflection characteristics in the front-rear direction when the three kinds of recliners are assembled to the rigid frame.

FIG. 5 illustrates the spring characteristics of the High-High combination. Under the condition where the variation in the left-right direction is nominal, the linear spring characteristic was exhibited in the cases of the five variation types of the seat back frame. A hysteresis loss was 10 N. Under the condition where the variation in the left-right direction was +3 mm, a weak combined nonlinear spring characteristic was exhibited under the condition of the downward fanning type, and under the other four conditions, a linear spring characteristic was exhibited. A hysteresis loss was 20 to 40 N. Under the condition where the left-right direction variation was -3 mm, a weak combined nonlinear spring characteristic was exhibited under the offset type condition, and a linear spring characteristic was exhibited under the other four conditions. A hysteresis loss was 20 to 38 N.

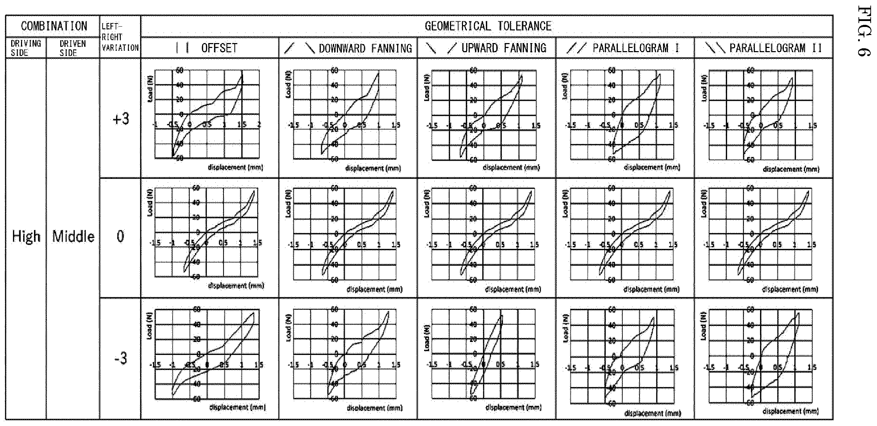

FIG. 6 illustrates the spring characteristics of the High-Middle combination. Under the condition where the left-right direction variation was nominal, a weak combined nonlinear spring characteristic was exhibited in the cases of the five variation types of the back frame.

A hysteresis loss was 7 N. Under the condition where the left-right direction variation was +3 mm, a weak combined nonlinear spring characteristic was exhibited, and a hysteresis loss was 20 to 47 N. Under the condition where the left-right direction variation was -3 mm, a weak combined nonlinear spring characteristic was exhibited under the conditions except the condition of the downward fanning type, and a linear spring characteristic was exhibited under the condition of the downward fanning type. A hysteresis loss was 22 to 47 N.

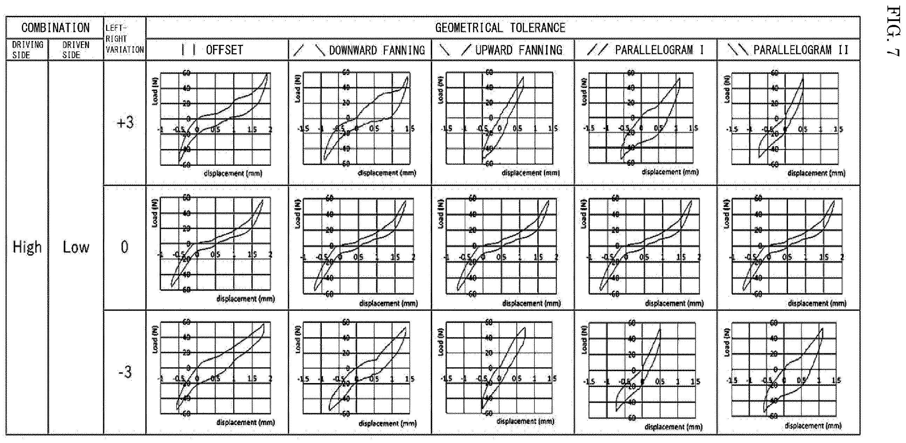

FIG. 7 illustrates the spring characteristics of the High-Low combination. In the cases of the five variation types of the back frame, a combined nonlinear spring characteristic was exhibited under the condition where the left-right direction variation was nominal. A hysteresis loss was 8 N. Under the conditions where the left-right direction variation was +3 mm and -3 mm, a linear spring characteristic was exhibited and a hysteresis loss was within a range of 10 to 30 N in the case of the downward fanning type. Under the conditions where the variations in the left-right direction were +3 mm and -3 mm, in the case of the offset type and the downward fanning type, a weak combined nonlinear spring characteristic was exhibited and a hysteresis loss was 10 to 47 N. Under the condition where the left-right direction variation was +3 mm, in the case of the parallelogram I type, a weak combined nonlinear spring characteristic was exhibited and a hysteresis loss was 38 N. Under the -3 mm condition, a weak combined nonlinear spring characteristic was exhibited, and a hysteresis loss was 20 N. This difference in energy loss between the load-deflection characteristics under the +3 mm and -3 mm conditions is caused by the difference in the hysteresis loss. The characteristic under the condition where the left-right direction variation was +3 mm in the case of the parallelogram II type was the same as that exhibited under the - 3 mm condition in the case of the parallelogram I type. Similarly, in the case of the parallelogram II type, the characteristic under the condition where the left-right direction variation was -3 mm was the same as the characteristic under the +3 mm condition in the case of the parallelogram I pattern.

Table 2 shows the results of the confirmation of the lockability. In the High-High combination, neither the driving side nor the driven side was locked in the case of the parallelogram I type and II type under the +3 mm and -3 mm variation conditions. In the High-Middle combination, the driving side was not locked in the case of the parallelogram I pattern under the + 3 mm variation condition and in the case of the parallelogram II type under the -3 mm variation condition.

In the High-Low combination, under the nominal condition, the spring characteristic in the front-rear direction was a combined nonlinear spring characteristic, and abnormal sound was generated when an input was larger than expected, for example, during traveling on a rough road. The left and right recliners synchronously locked even if the hysteresis loss was 40 N and thus there was no problem in the lockability. Therefore, the High-Low combination was the most effective in terms of the lockability.

**[Table 2]**

| COMBINATION | | CONFIRMATION RESULT | | | | | | | | | | |
|---|---|---|---|---|---|---|---|---|---|---|---|---|
| DRIVING SIDE | DRIVEN SIDE | LEFT-RIGHT VARIATION | GEOMETRICAL TOLERANCE | | | | | | | | | |
| | | | 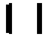 OFFSET | | 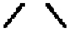 DOWNWARD FANNING | | 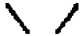 UPWARD FANNING | | 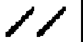 PARALLELOGRAM I | | 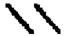 PARALLELOGRAM II | |
| | | | FRONT→REAR | REAR→FRONT | FRONT→REAR | REAR→FRONT | FRONT →REAR | REAR→FRONT | FRONT →REAR | REAR→FRONT | FRONT →REAR | REAR→FRONT |
| High | High | +3 | OK | OK | OK | OK | OK | OK | NOT LOCKED | NOT LOCKED | NOT LOCKED | NOT LOCKED |
| | | 0 | OK | OK | OK | OK | OK | OK | OK | OK | OK | OK |
| | | -3 | OK | OK | OK | OK | OK | OK | NOT LOCKED | NOT LOCKED | NOT LOCKED | NOT LOCKED |
| | Middle | +3 | OK | OK | OK | OK | OK | OK | OK | DRIVING SIDE NOT LOCKED | OK | OK |
| | | 0 | OK | OK | OK | OK | OK | OK | OK | OK | OK | OK |
| | | -3 | OK | OK | OK | OK | OK | OK | OK | OK | OK | DRIVING SIDE NOT LOCKED |
| | Low | +3 | OK | OK | OK | OK | OK | OK | OK | OK | OK | OK |
| | | 0 | OK | OK | OK | OK | OK | OK | OK | OK | OK | OK |
| | | -3 | OK | OK | OK | OK | on | OK | OK | OK | OK | OK |

The High-High combination exhibited a linear spring characteristic and did not generate abnormal sound. However, as for the lockability, a lock failure occurred when the frame became a parallelogram under the conditions where the left-right direction variation was +3 mm and -3 mm. The curvature of the connecting rod could not absorb the variation, the cam and the lock gears inclined, and the frictional force of the guide bracket and the lock gears became large to increase sliding resistance. Finally, the tooth tips of the internal gear and tooth tips of the lock gears abut on each other, causing a phenomenon that the gears were difficult to engage.

In the case of the recliner: High-High, it is necessary to provide play for absorbing the eccentricity of the left and right recliners when the connecting rod is designed. The play is play between the shaft or the cam and the connecting rod. It is also necessary to consider absorbing the variation by the curvature, using the elasticity of the connecting rod.

It has been also found out that the above spring characteristic evaluation method is capable of catching the possibility of the generation of abnormal sound that is not normally generated and is appropriate as an evaluation method.

In the case of the structure having the recliners on both sides, it has also been found out that making the spring characteristics of the driving side and the driven side different, preferably, making the backlash of the driving-side recliner smaller than the backlash of the driven-side recliner as in the above is effective for absorbing the variation of the back frame and reducing an operation synchronization failure.

Being made of iron parts, the recliner generated abnormal sound at its metal contact portion when it became a combined nonlinear spring with a small spring constant at a balanced point.

By measuring the load-deflection characteristics in the front-rear direction and the left-right direction, it was possible to identify a spring characteristic causing the generation of the abnormal sound. As the backlash is larger, larger abnormal sound is generated, but it is thought to be possible to ensure lockability while avoiding the abnormal sound if a connecting rod with a low flexural rigidity and a high torsional rigidity can be designed to absorb the eccentricity of the left and right recliners.

The use of a recliner having a backlash in the left-right direction involves a possibility of the generation of abnormal sound when part accuracy increases. A possible measure for this is to eliminate the backlash of the driven-side recliner by making a residual stress forcibly act on the frame.

### Explanation of Reference Signs

- 1: vehicle seat
- 2: seat cushion frame
- 3: seat back frame
- 10: seat recliner structure
- 11: recliner (driving side)
- 12: recliner (driven side)
- 13: connecting rod
- 21: guide bracket
- 22: internal gear
- 23a to 23d: lock gear
- 24: ring
- 25: cam
- 26: spring
- 27: steel ball
- 28: spacer

## Claims

1. A seat recliner structure comprising:
recliners which are provided on a left side and a right side of a cushion frame and a back frame to recline the back frame relative to the cushion frame; and
a connecting rod which connects the left and right recliners to synchronize the left and right recliners,
wherein the left and right recliners have different backlashes, and the backlash of the driving-side recliner is relatively smaller than the backslash of the driven-side recliner.

2. The seat recliner structure according to claim 1,
wherein the left and right recliners each have: a guide bracket and an internal gear which rotate relative to each other, one of which is attached to the cushion frame, and the other of which is attached to the back frame; and a plurality of lock gears which operate in a diameter direction between the guide bracket and the internal gear to separate from and approach each other and which include external teeth engageable with internal teeth of the internal gear, and
wherein the left and right recliners are different in the backlash depending on the presence or absence of a steel ball between any of the plurality of lock gears and the guide bracket.

3. The seat recliner structure according to claim 2, wherein the recliner having the steel ball is relatively smaller in the backlash than the recliner not having the steel ball.

4. The seat recliner structure according to claim 1,
wherein the left and right recliners each have: a guide bracket and an internal gear which rotate relative to each other, one of which is attached to the cushion frame, and the other of which is attached to the back frame; and a plurality of lock gears which operate in a diameter direction between the guide bracket and the internal gear to separate from and approach each other and which include external teeth engageable with internal teeth of the internal gear,
wherein the left and right recliners each have a steel ball provided between any of the plurality of lock gears and the guide bracket, and
wherein the left and right recliners are different in the backlash depending on a difference in the shape of grooves provided in facing surfaces of the lock gear where the steel ball is disposed and the guide bracket.

5. The seat recliner structure according to claim 4, wherein the backlash is relatively smaller as a circumferential-direction movement amount of the steel ball restricted by the grooves is smaller.

6. The seat recliner structure according to any one of claims 2 to 5, wherein a difference in clearance size between a lock gear between which and the guide bracket the steel ball is not provided, out of the plurality of lock gears, and at least one of surfaces, of the guide bracket and the internal gear, facing the lock gear further makes the backlashes different.

7. The seat recliner structure according to any one of claims 1 to 6,
wherein the left and right recliners are selected from those that are substantially equal in spring constants in linear change ranges of load-deflection characteristics both in a front-rear direction and a left-right direction, the load-deflection characteristics being indicated by the spring constants that are found from a relation between a load and a deflection amount which is measured at an input point of the load when a plate member is attached to a fixing jig through the recliner, and the load up to 50 N is applied in the front-rear direction and the left-right direction of the plate member to a position, of the plate member, 500 mm above a rotation center of the recliner, and
wherein the driving-side and driven-side recliners are selected based on determination that, when entire deflection amount change ranges of the load-deflection characteristics are compared, a recliner whose characteristics in the front-rear direction and the left-right direction both exhibit relatively the highest linearity has the smallest backlash, and as compared with the recliner having the smallest backlash, a recliner whose characteristic only in one of the front-rear direction and the left-right direction exhibits weak linearity has a relatively larger backlash and a recliner whose characteristics in the front-rear direction and the left-right direction both exhibit weak linearity has a still larger backlash.

8. A vehicle seat comprising a seat recliner structure for reclining a back frame relative to a cushion frame,
wherein the seat recliner structure is the seat recliner structure according to any one of claims 1 to 7.
